**Europäisches Patentamt**

**European Patent Office**

**Office européen des brevets**

(19)

(11) Veröffentlichungsnummer: **0 331 799 B1**

(12) **EUROPÄISCHE PATENTSCHRIFT**

(45) Veröffentlichungstag der Patentschrift: **01.04.92**

(51) Int. Cl.⁵: **G01M 17/00**

(21) Anmeldenummer: **88119128.2**

(22) Anmeldetag: **17.11.88**

(54) **Verfahren und Vorrichtung zur Bestimmung der Motorleistung eines Kraftfahrzeugs.**

(30) Priorität: **10.03.88 DE 3808013**

(43) Veröffentlichungstag der Anmeldung:
**13.09.89 Patentblatt 89/37**

(45) Bekanntmachung des Hinweises auf die
Patenterteilung:
**01.04.92 Patentblatt 92/14**

(84) Benannte Vertragsstaaten:
**AT BE CH DE ES FR GB GR IT LI LU NL**

(56) Entgegenhaltungen:
**DE-A- 2 540 514**
**DE-A- 2 851 154**
**DE-A- 3 008 901**

(73) Patentinhaber: **Maschinenbau Haldenwang
GmbH & Co. KG
Hoyen 2
W-8961 Haldenwang(DE)**

(72) Erfinder: **Knestel, Anton
Riedleweg 14,
W-8961 Hopferbach(DE)**

(74) Vertreter: **Patentanwälte Beetz sen. - Beetz
jun. Timpe - Siegfried - Schmitt-Fumian-
Mayr
Steinsdorfstrasse 10
W-8000 München 22(DE)**

**Beschreibung**

Die Erfindung betrifft ein Verfahren zur Bestimmung der Motorleistung eines Kraftfahrzeugs auf einem Rollenprüfstand, dessen Rollen mit konstanter Bremskraft abgebremst werden können, wobei in einem ersten Meßvorgang die an den Rädern des Kraftfahrzeugs wirksame Nettoleistung durch Erfassen der Rollen-Bremskraft bestimmt wird.

Auf herkömmlichen Rollenprüfständen (z.B. nach DE-A-25 40 514) kann lediglich die an den Fahrzeugrädern wirksame Nettoleistung des Fahrzeugmotors gemessen werden, die jedoch mit der internen Verlustleistung des jeweiligen Fahrzeugs behaftet ist. Grundsätzlich könnte die Größe dieser Verlustleistung auf der Grundlage der im Antriebszug wirksamen Widerstände und Massenträgheiten berechnet werden, so daß durch Addition der gemessenen Nettoleistung und der berechneten Verlustleistung die vom Fahrzeugmotor tatsächlich abgegebene Bruttoleistung bestimmt werden könnte. In der Praxis ist dieses Vorgehen jedoch nicht durchführbar, weil die Verlustleistung von einer Vielzahl verschiedener Parameter abhängt, die für die jeweiligen Fahrzeugtypen unterschiedlich sind und auch vom Zustand des einzelnen Fahrzeugs, z. B. dem Verschleiß der im Antriebszug umlaufenden Einzelteile, von der Viskosität der verwendeten Schmiermittel, vom Lagerzustand, abhängen.

Andererseits gibt die genaue Feststellung der Bruttoleistung des Fahrzeugmotors Aufschlüsse über den jeweiligen Motorzustand, wenn die ermittelten Werte mit den Herstellerangaben in Bezug gesetzt werden. Entsprechendes gilt auch für eine praxisnahe Bestimmung der Verlustleistung, die Rückschlüsse auf den Zustand der Kraftübertragung, z. B. des Schaltgetriebes, der Ausgleichsgetriebe, der Lager usw., zuläßt. Bisher konnte die Bruttoleistung eines Fahrzeugmotors mit ausreichender Genauigkeit nur nach Abkuppeln des Antriebszuges und durch eine Leistungsmessung direkt an der Ausgangswelle des Motors bestimmt werden. Eine derartige Prüfung ist jedoch nur auf speziellen Motorprüfständen möglich und kann in der Regel nur an einem komplett ausgebauten Antriebsblock durchgeführt werden. Der hierzu erforderliche Aufwand übersteigt regelmäßig die Möglichkeiten normaler Reparatur- und Wartungsbetriebe.

Aufgabe der Erfindung ist es, ein Verfahren zur Prüfung der Motorleistung eines Kraftfahrzeugs zu schaffen, das unter praxisnahen Bedingungen die individuelle genaue Bestimmung der Verlustleistung und der Bruttoleistung des jeweiligen Fahrzeugs auf einfache Weise ermöglicht. Ferner soll ein Prüfstand geschaffen werden, auf dem die Bruttoleistung eines Fahrzeugmotors ohne dessen Ausbau aus dem Fahrzeug sowie die interne Verlustleistung des jeweiligen Fahrzeugs schnell und problemlos bestimmt werden kann.

Das erfindungsgemäße Verfahren zeichnet sich zur Lösung der Erfindungsaufgabe dadurch aus, daß in einem zweiten Meßvorgang die Auslaufzeit $t_1$ bestimmt wird, innerhalb der die Geschwindigkeit von einem vorgegebenen Wert $v_1$ auf einen zweiten vorgewählten Wert $v_2$ im ungebremsten Zustand abgefallen ist, daß in einem weiteren Meßvorgang die Rollen des Prüfstands mit einer konstanten Kraft abgebremst und die Auslaufzeit $t_2$ gemessen wird, innerhalb der die Geschwindigkeit vom Wert $v_1$ auf den Wert $v_2$ abgefallen ist, daß anschließend die interne Verlustleistung des Kraftfahrzeugs nach der Gleichung

$$P_x = \frac{F_R \cdot t_2 \cdot v_1}{(t_1 - t_2) \cdot 3600} \quad [kW]$$

errechnet und zu der gemessenen Nettoleistung addiert wird.

In der vorstehenden Gleichung bedeuten:

$P_x$ die Verlustleistung,

$v_1$ die Ausgangsgeschwindigkeit des Kraftfahrzeugs,

$F_R$ die konstante Bremskraft an den Prüfstand-Rollen,

$t_1$ die Auslaufzeit mit ungebremsten Rollen im Geschwindigkeitsintervall und

$t_2$ die Auslaufzeit mit konstant abgebremsten Rollen im Geschwindigkeitsintervall.

Die Erfindung geht von der Erkenntnis aus, daß die die interne Verlustleistung bestimmenden Widerstände und Momente im Antriebszug eines Kraftfahrzeugs unabhängig von der Größe der jeweiligen Bremskraft der Rollen für jeweils gleiche Geschwindigkeitsbereiche praktisch konstant ist, solange die Prüfbedingungen und die Parameter des Kraftfahrzeugs, wie z. B. die Ölviskosität, der eingelegte Gang usw., nicht geändert werden. Durch Wiederholen des Prüfvorgangs mit unterschiedlich großen Bremskräften, z. B. im ersten Prüfvorgang mit gelösten Bremsen oder nur einer geringen konstanten Bremskraft und im zweiten Prüfvorgang mit einer erhöhten konstanten Bremskraft, und durch rechnerische Verknüpfung der Resultate der einzelnen Meßvorgänge kann der Einfluß aller am Auslauf beteiligten und auf den Trommelradius reduzierten Drehmassen ausgeschaltet werden. In der für den ersten Prüfvorgang mit ungebremsten Rädern bzw. Rollen gültigen Beziehung

$$m = \frac{F_1 \cdot t_1}{v_1 - v_2}$$

ist m die Summe aller am Auslauf beteiligten und auf den Trommelradius reduzierten Drehmassen, die beim Prüfvorgang innerhalb des gewählten Geschwindigkeitsintervalls $v_1$ - $v_2$ als praktisch konstant betrachtet wird. Voraussetzung ist allerdings, daß die Öltemperatur im Schaltgetriebe, im Differential und in den Lagern konstant ist. Im ersten Prüfvorgang wird lediglich die Auslaufzeit $t_1$ gemessen, innerhalb der bei gelösten Bremsen die Geschwindigkeit vom Ausgangswert $v_1$ auf den eingestellten Endwert $v_2$ abgefallenist. Der Faktor $F_1$ in der obigen Gleichung kennzeichnet die fahrzeuginternen Bremsmomente und den Rollwiderstand zwischen Fahrzeugrad und Prüfstand-Rolle.

Beim zweiten Prüfvorgang wird der Fahrzeugmotor im gleichen Gang wie beim ersten Prüfvorgang beschleunigt, bis die fiktive Fahrzeuggeschwindigkeit $v_1$ erreicht bzw. geringfügig éberschritten wird. Anschließend werden mit Hilfe der Wirbelstrom-Bremse des Rollenprüfstandes die Prüfstand-Rollen mit einer konstanten Bremskraft $F_2$ abgebremst und es wird die Zeitspanne $t_2$ gemessen, innerhalb die - fiktive - Fahrzeuggeschwindigkeit vom Ausgangswert $v_1$ bis auf den eingestellten Endwert $v_2$ abgefallen ist. In beiden Prüfvorgängen sind die Geschwindigkeitswerte $v_1$ und $v_2$ gleich. Für diesen Prüfvorgang gilt folgende Beziehung

$$m = \frac{(F_1 + F_2) \cdot t_2}{v_1 - v_2} \; .$$

Durch Gleichsetzung der beiden vorstehend genannten Beziehungen ergibt sich

$$F_1 = \frac{F_2 \cdot t_2}{t_1 - t_2} \; .$$

In der vorstehenden Gleichung kennzeichnet $F_1$ den am Rollradius wirksamen Gesamtwiderstand während des Prüflaufes, der durch die vorgegebene Bremskraft $F_2$ und die gemessenen Zeitspannen $t_1$ und $t_2$ errechnet werden kann. Die interne Verlustleistung $P_x$ des Kraftfahrzeugs bestimmt sich dann nach der bereits oben angegebenen Gleichung

$$P_x = \frac{F_1 \cdot t_2 \cdot v_1}{\left(t_1 - t_2\right) \cdot 3600} \quad \left[kW\right] \; .$$

Da bei der Durchführung des erfindungsgemäßen Verfahrens neben der Einstellung nur weniger Werte in der Steuereinheit des Prüfstands lediglich zwei Zeitspannen gemessen werden müssen, kann dieses Verfahren auch von ungeübtem Personal durchgeführt werden. Die erhaltenen Meßwerte und die durch die Rechenoperationen erzielten Resultate sind ausreichend genau, um wertvolle Aussagen über den jeweiligen Zustand des Fahrzeugmotors und des Antriebszuges zu ermöglichen. Eine gesteigerte Aussagekraft und höhere Genauigkeit kann dadurch erhalten werden, daß bei einem Fahrzeug mehrere Prüfungen in jeweils unterschiedlichen Geschwindigkeitsbereichen durchgeführt werden.

Der erfindungsgemäße Rollenprüfstand zur Bestimmung der Motorleistung eines Kraftfahrzeugs enthält je ein Rollen-Paar für jedes angetriebene Fahrzeugrad, eine Bremse für die Rollenpaare, die während eines Prüfvorgangs eine konstante Bremskraft erzeugen kann, Sensoren zum Messen der Drehzahl der Rollen bzw. der Kraftfahrzeugräder und der an den Rollen wirksamen Bremskräfte sowie eine Steuereinrichtung, welche die Bremskräfte während eines Prüfvorganges auf dem eingestellten Wert konstanthält und deren Rechner die Verlustleistung $P_x$ auf der Grundlage der gemessenen Zeiten $t_1$ und $t_2$, der eingestellten konstanten Rollen-Bremskraft $F_2$ und der Ausgangs-Geschwindigkeit $v_1$ nach der Beziehung

$$P_x = \frac{F_2 \cdot t_2 \cdot v_1}{(t_1 - t_2) \cdot 3600} \; [kW]$$

berechnet.

Ein Vorteil der Erfindung liegt darin, daß bereits bestehende Rollen-Prüfstände mit nur geringem technischen Aufwand nachgerüstet werden können, um die - bisher nicht mögliche - Messung der Bruttoleistung eines Kraftfahrzeugmotors und der Verlustleistung im Antriebszug des Kraftfahrzeuges messen zu können. Dies gilt insbesondere für schwere Prüfstände für Lastwagen und Omnibusse, bei denen die Trägheitsmomente der umlaufenden bzw. bewegten Teile des Prüfstandes, wie die umlaufenden Rollenpaare, deren Verbindungswellen untereinander und zur Bremse sowie die umlaufenden Teile der verwendeten Wirbelstrom-Bremse hohe Beträge haben, deren Einfluß auf die ermittelten Leistungswerte durch das erfindungsgemäße Vorgehen beseitigt wird, so daß die auf einem erfindungsgemäß ausgebildeten Prüfstand erhaltenen Ergebnisse ausschließlich die fahrzeugspezifischen Leistungswerte des jeweils geprüften Kraftfahrzeugs wiedergeben.

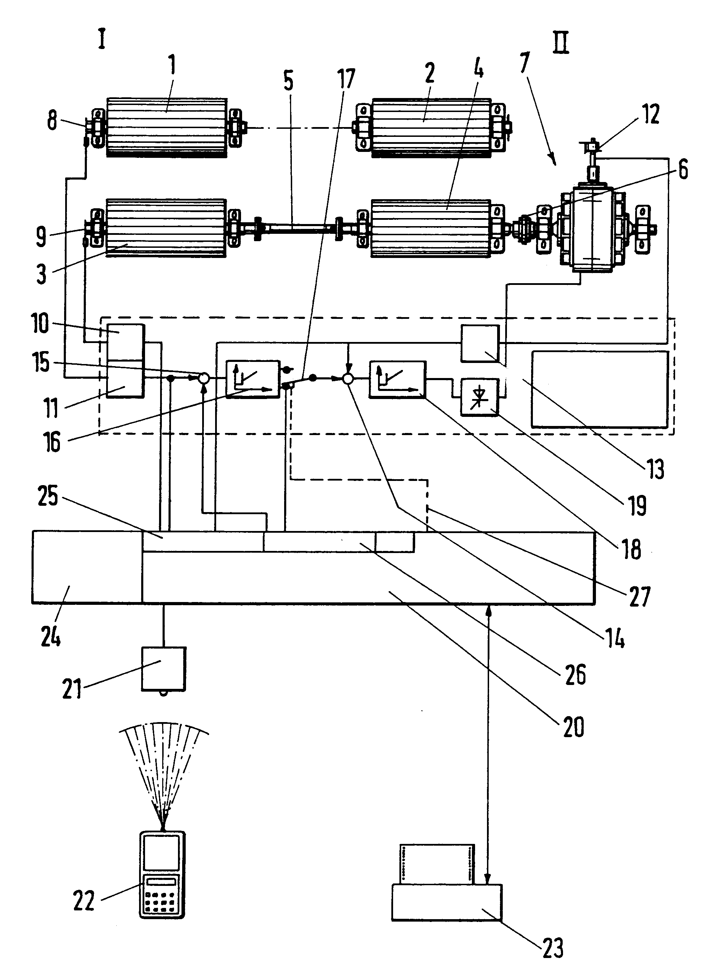

Im folgenden wird die Erfindung anhand eines in der Zeichnung schematisch dargestellten Rollen-Prüfstandes im einzelnen erörtert.

Von dem Rollen-Prüfstand sind lediglich zwei Rollen-Paare I und II dargestellt, von denen je eine Rolle 1, 2 jedes Paares frei gelagert ist und die jeweils zweite Rolle 3, 4 über eine Zwischenwelle 5 miteinander und über eine elastische Kupplung 6 mit einer Wirbelstrom-Bremse 7 verbunden sind. Das zu prüfende Fahrzeug wird so in den Prüfstand eingefahren, daß die beiden Räder seiner angetriebenen Achse auf den Rollen-Paaren I bzw. II aufliegen. Wie dargestellt, sind an den Wellen der beiden Rollen 1 und 3 je ein inkrementaler Drehzahlmesser 8, 9 angeordnet, die der Fahrgeschwindigkeit proportionale Frequenzsignale Frequenz-Spannungs-Wandlern 10, 11 zuführen. An der Wirbelstrom-Bremse 7 ist ein Bremskraftmesser 12 angeordnet, dessen Ausgangssignale über einen Verstärker 13 einer Schnittstelle 14 zugeführt werden. Die Ausgangssignale aus den beiden Frequenz-Spannungs-Umsetzern 10, 11 werden über eine Schnittstelle 15 einem Drehzahlregler 16 zugeführt, der die Prüfgeschwindigkeit bei unterschiedlichen Leistungen konstanthält und zwei Ausgänge hat. Ein Schalter 17 zum Umschalten von Geschwindigkeit auf Zugkraftregelung kann einen der Reglerausgänge mit der Schnittstelle 14 und über einen Zugkraftregler 18 zum Konstanthalten der Last bei verschiedenen Geschwindigkeiten mit einer Leistungsstufe 19 verbinden, welche die Stromzufuhr zur Wirbelstrom-Bremse 7 steuert. Die vorstehend genannten Bauelemente 10 bis 19 sind in einer gemeinsamen Steuereinheit integriert. Mit einem der Ausgänge des Drehzahlreglers 16 und mit der Schnittstelle 15 ist ein Rechner 20 verbunden, welcher die bei den verschiedenen Prüfvorgängen erforderlichen Rechenoperationen zur Berechnung der Verlustleistung des jeweils zu prüfenden Kraftfahrzeugs bzw. der Bruttoleistung seines Motors ausführt. Die Steuerung des Rechners kann durch eine Fernbedienung erfolgen, deren Empfänger 21 mit dem Rechner 20 verbunden ist und deren Sender 22 ein Handgerät mit Tastatur sein kann. Zum Erstellen von Prüfberichten ist an den Rechner 20 ein Drucker 23 angeschlossen. Dem Rechner 20 sind ein Timer 24 zum Messen der Auslaufzeit zwischen zwei Geschwindigkeiten, ein DA-Wandler 25 und ein analoges Glied 26 mit Ausgabekanal 27 zum Vorwählen der Prüfgeschwindigkeit oder der Zugkraft zugeordnet.

**Patentansprüche**

**1.** Verfahren zur Bestimmung der Motorleistung eines Kraftfahrzeugs auf einem Rollenprüfstand, bei dem in einem ersten Meßvorgang die an den Rädern wirksame Nettoleistung des Fahrzeugmotors durch Erfassen einer auf die Prüfstand-Rollen einwirkenden Bremskraft bestimmt wird,
**dadurch gekennzeichnet,**
daß in einem zweiten Meßvorgang die Auslaufzeit ($t_1$) bestimmt wird, innerhalb welcher die fiktive Geschwindigkeit von einem vorgegebenen Wert ($v_1$) auf einen zweiten vorgewählten Wert ($v_2$) im

ungebremsten Zustand der Prüfstand-Rollen abgefallen ist,

daß in einem dritten Meßvorgang die Prüfstand-Rollen mit einer konstanten Bremskraft ($F_1$) abgebremst werden und die Auslaufzeit ($t_2$) gemessen wird, innerhalb der die Geschwindigkeit vom Ausgangswert ($v_1$) auf den vorgewählten Endwert ($v_2$) abgefallen ist,

daß die interne Verlustleistung ($P_x$) des Kraftfahrzeugs nach der Gleichung

$$P_x = \frac{F_1 \cdot t_2 \cdot v_1}{(t_1 - t_2) \cdot 3600} \quad [kW]$$

errechnet wird,

daß die errechnete Verlustleistung ($P_x$) zu der gemessenen Nettoleistung addiert wird, wobei in der obigen Gleichung bedeuten

$P_x$ = Verlustleistung,

$F_1$ = konstante Bremskraft der Prüfstand-Rollen

$v_1$ = Ausgangsgeschwindigkeit,

$t_1$ = Auslaufzeit mit ungebremsten Rollen,

$t_2$ = Auslaufzeit mit konstant abgebremsten Rollen.

2. Rollenprüfstand zur Bestimmung der Motorleistung eines Kraftfahrzeugs,

mit je einem Rollen-Paar (I,II) für jedes angetriebene Fahrzeugrad,

mit einer Bremse (7) für jedes Rollen-Paar (I,II),

mit Sensoren zum Messen der Drehzahl (8,9) und der an den Rollen (1,3) wirksamen Bremskräfte (12) und

mit einer Steuereinrichtung für die Bremse (7),

dadurch gekennzeichnet,

daß die Steuereinrichtung einen Bremskraftregler enthält, der die an den Rollen (3, 4) wirksame Bremskraft auf einen eingestellten Wert konstanthält und daß der Steuereinrichtung ein Rechner (20) zugeordnet ist, der die Verlustleistung ($P_x$) auf der Grundlage der gemessenen Auslaufzeiten ($t_1$ und $t_2$), der eingestellten Rollen-Bremskraft ($F_2$) und der Ausgangs-Geschwindigkeit ($v_1$) nach der Beziehung

$$P_x = \frac{F_2 \cdot t_2 \cdot v_1}{(t_1 - t_2) \cdot 3600} \quad [kW]$$

errechnet.

**Claims**

1. A method of determining the engine power of a motor vehicle on a roller type dynamometer, the net power of the vehicle engine operative at the wheels being determined, in a first measuring operation, by detecting a brake power acting on the dynamometer rollers, characterised in that there is determined in a second measuring operation the deceleration time ($t_1$) within which the imaginary speed has droped from a predetermined value ($v_1$) to a second preselected value ($v_2$) in the unbraked state of the dynamometer rollers,

in that in a third measuring operation the dynamometer rollers are braked with a constant brake power ($F_1$) and the deceleration time ($t_2$) is measured during which the speed has dropped from the initial value ($v_1$) to the preselected final value ($v_2$),

in that the internal power loss ($P_x$) of the motor vehicle is calculated in accordance with the equation

EP 0 331 799 B1

$$P_x = \frac{F_1 \cdot t_2 \cdot v_1}{(t_1 - t_2) \cdot 3600} \quad [kW],$$

in that the calculated power loss ($P_x$) is added to the measured net power, the terms in the above equation having the following meanings:

$P_x$ = power loss
$F_1$ = constant brake power of dynamometer rollers
$v_1$ = initial speed
$t_1$ = deceleration time with unbraked rollers
$t_2$ = deceleration time with constantly braked rollers.

2. A roller type dynamometer for determining the engine power of a motor vehicle,
comprising a pair of rollers (I, II) for each driven vehicle wheel,
with a brake (7) for each pair of rollers (I, II),
with sensors for measuring the speed (8, 9) and the brake powers (12) operative at the rollers (1, 3) and
with a control means for the brake (7)
characterised in that
the control means comprises a brake power regulator which keeps the brake power operative at the rollers (3, 4) constant at a set value and in that the control means is associated with a computer (20) which calculates the power loss ($P_x$) on the basis of the measured deceleration times ($t_1$ and $t_2$) of the set roller brake power ($F_2$) and the initial speed ($v_1$) in accordance with the equation:

$$P_x = \frac{F2 \cdot t_2 \cdot v_1}{(t_1 - t_2) \cdot 3600} \quad [kW].$$

**Revendications**

1. Procédé pour déterminer la puissance du moteur d'un véhicule automobile sur un banc d'essai à rouleaux, selon lequel on détermine, dans un premier processus de mesure, la puissance nette du moteur du véhicule, agissant sur les roues, par la détection d'un effort de freinage appliqué aux rouleaux du banc d'essai
**caractérisé en ce**
que l'on détermine dans un deuxième processus de mesure le temps de marche par inertie ($t_1$) dans lequel la vitesse fictive descend d'une valeur préfixée ($v_1$) à une deuxième valeur présélectionnée ($v_2$), à l'état non freiné des rouleaux du banc d'essai
que l'on freine les rouleaux du banc d'essai avec un effort de freinage ($F_1$) constant dans un troisième processus de mesure et on mesure le temps de marche par inertie ($t_2$) dans lequel la vitesse descend de la valeur initiale ($v_1$) à la valeur finale présélectionnée ($v_2$),
que l'on calcule la perte de puissance interne ($P_x$) du véhicule selon l'équation

$$P_x = \frac{F_1 \cdot t_2 \cdot v_1}{(t_1 - t_2) \cdot 3600} \quad [kW]$$

où
$P_x$ = perte de puissance
$F_1$ = effort de freinage constant des rouleaux du banc d'essai
$v_1$ = vitesse initiale,
$t_1$ = temps de marche par inertie sans freinage des rouleaux et
$t_2$ = temps de marche par inertie à freinage constant des rouleaux

6

et on ajoute la perte de puissance ($P_x$) calculée à la puissance nette mesurée.

2.  Banc d'essai à rouleaux pour déterminer la puissance du moteur d'un véhicule automobile, comprenant
une paire de rouleaux (I, II) pour chaque roue motrice du véhicule,
un frein (7) pour chaque paire de rouleaux (I, II),
des capteurs pour mesurer la vitesse de rotation (8, 9) et les efforts de freinage (12) agissant sur les rouleaux (1, 3) et
un dispositif de commande pour le frein (7)
caractérisé en ce
que le dispositif de commande contient un régulateur de l'effort de freinage qui maintient l'effort de freinage agissant sur les rouleaux (3, 4) de façon constante à une valeur ajustée et qu'un calculateur (20) est coordonné au dispositif de commande pour calculer la perte de puissance ($P_x$) sur la base des temps de marche par inertie ($t_1$ et $t_2$) mesurés, de l'effort de freinage ($F_2$) des rouleaux ajusté et de la vitesse initiale ($v_1$), selon la relation

$$P_x = \frac{F_2 \cdot t_2 \cdot v_1}{(t_1 - t_2) \cdot 3600} \quad [kW]$$

7